# EUROPEAN PATENT APPLICATION

(11) **EP 4 723 049 A1**
(43) Date of publication of application: **08.04.2026**
(21) Application number: 25200728.1
(22) Date of filing: 08.09.2025
(51) Int. Cl.: G06T 19/00

(54) **SYSTEMS AND METHODS FOR IMAGE FUSION RENDERING FOR REGISTERED MULTI-VOLUME ANALYSIS**

(30) Priority: 03.10.2024 US 202418905482
(71) Applicant: GE Precision Healthcare LLC, Waukesha, WI 53188 (US)
(72) Inventor: HERNANDEZ LONDONO, Jorge Eduardo, Waukesha, 53188 (US); MORARD, Vincent, Waukesha, 53188 (US); BOURGHES, Sofiene, Waukesha, 53188 (US)
(74) Representative: Kilburn & Strode LLP

(57) **Abstract**

A system is configured to perform actions including obtaining a first 3D medical image from a first medical imaging volume acquisition and a second 3D medical image from a second medical imaging volume acquisition, wherein the first and second medical imaging volume acquisitions are integrally registered to each other. The actions include receiving a selection of a region of interest in the second 3D medical image and performing gradient domain fusion utilizing blending of respective pixel intensities between the region of interest selected in the second 3D medical image and a region in the first 3D medical image corresponding to the region of interest to generate a blended region of interest. The actions include displaying, on a user interface, the first 3D medical image in a first viewport and the blended region of interest in a second viewport located at the region in the first 3D medical image.

## Description

### BACKGROUND

The subject matter disclosed herein relates to image processing, and more particularly, to systems and methods for image fusion rendering for registered multi-volume analysis.

Clinical decisions may be derived from analysis of any number of sets of data. In the radiology domain, this can involve analysis of regions of interest from medical image data, which may include 2D or 3D medical images, such as images of organs (kidney, liver, spleen, etc.), blood vessels, bones, and the like. In some examples, medical image analysis can be performed at the request of a clinician for a specific purpose, which can include detection, assessment, and/or monitoring progression of anatomical abnormalities like lesions, tumors, aneurysms, atrophies, and stenosis of arteries, among others.

Visualization tools can enable accessing regions of interest of medical image data and performing the desired analysis. A rendering process can be employed to separate the rendering of regions of interest so as to improve a user interface for visualizing, detecting, assessing, and monitoring various anatomical abnormalities.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In one embodiment, a system is provided. The system includes a memory encoding processor-executable routines. The system also includes a processing system including one or more processors and configured to access the memory and to execute the processor-executable routines, wherein the process-executable routines, when executed by the processing system, cause the processing system to perform actions. The actions include obtaining a first three-dimensional (3D) medical image from a first medical imaging volume acquisition and a second 3D medical image from a second medical imaging volume acquisition, wherein the first medical imaging volume acquisition and the second medical imaging volume acquisition are integrally registered to each other. The actions also include receiving a selection of a region of interest in the second 3D medical image. The actions further include performing gradient domain fusion utilizing blending of respective pixel intensities between the region of interest selected in the second 3D medical image and a region in the first 3D medical image corresponding to the region of interest to generate a blended region of interest. The actions even further include displaying, on a user interface, the first 3D medical image in a first viewport and the blended region of interest in a second viewport located at the region in the first 3D medical image corresponding to the region of interest.

In another embodiment, a computer-implemented method is provided. The computer-implemented method includes obtaining, via a processing system including one or more processors, a first three-dimensional (3D) medical image from a first medical imaging volume acquisition and a second 3D medical image from a second medical imaging volume acquisition, wherein the first medical imaging volume acquisition and the second medical imaging volume acquisition are integrally registered to each other. The computer-implemented method also includes receiving, at the processing system, a selection of a region of interest in the second 3D medical image. The computer-implemented method further includes performing, via the processing system, gradient domain fusion utilizing blending of respective pixel intensities between the region of interest selected in the second 3D medical image and a region in the first 3D medical image corresponding to the region of interest to generate a blended region of interest. The computer-implemented method even further include displaying, via the processing system on a user interface, the first 3D medical image in a first viewport and the blended region of interest in a second viewport located at the region in the first 3D medical image corresponding to the region of interest.

In a further embodiment, a non-transitory computer-readable medium, the computer-readable medium including processor-executable code that when executed by a processing system including one or more processors, causes the processing system to perform actions. The actions include obtaining a first three-dimensional (3D) medical image from a first medical imaging volume acquisition and a second 3D medical image from a second medical imaging volume acquisition, wherein the first medical imaging volume acquisition and the second medical imaging volume acquisition are integrally registered to each other. The actions also include receiving a selection of a region of interest in the second 3D medical image. The actions further include performing gradient domain fusion utilizing blending of respective pixel intensities between the region of interest selected in the second 3D medical image and a region in the first 3D medical image corresponding to the region of interest to generate a blended region of interest. The actions even further include displaying, on a user interface, the first 3D medical image in a first viewport and the blended region of interest in a second viewport located at the region in the first 3D medical image corresponding to the region of interest.

### BRIEF DESCRIPTION OF THE DRAWINGS

These and other features, aspects, and advantages of the present subject matter will become better understood when the following detailed description is read with reference to the accompanying drawings in which like characters represent like parts throughout the drawings, wherein:
FIG. 1 is a schematic diagram of an example imaging system used to generate 3D multi-volume imaging data, in accordance with aspects of the present disclosure;
FIG. 2 is a block diagram of a computing device, in accordance with aspects of the present disclosure;
FIG. 3 is a flow chart of a method for image fusion rendering for registered multi-volume analysis, in accordance with aspects of the present disclosure;
FIG. 4 is a flow chart of a method for performing gradient domain fusion using blending, in accordance with aspects of the present disclosure;
FIG. 5 is a flow chart of a method for viewing different frames or slices of a region of interest, in accordance with aspects of the present disclosure;
FIG. 6 is a flow chart of a method for changing location of a second viewport, in accordance with aspects of the present disclosure;
FIG. 7 is a flow chart of a method for changing a region of interest, in accordance with aspects of the present disclosure;
FIG. 8 depicts images illustrating the comparison of arterial lesion in portal and delayed phases utilizing a naive solution and gradient domain fusion using blending, in accordance with aspects of the present disclosure;
FIG. 9 depicts images illustrating the comparison of a diffusion lesion in images acquired with different sequences utilizing a naive solution and gradient domain fusion using blending, in accordance with aspects of the present disclosure;
FIG. 10 is a schematic diagram illustrating image fusion rendering for registered multi-volume analysis, in accordance with aspects of the present disclosure; and
FIG. 11 is an example of a graphical user interface on a display having an integrated viewport on another viewport, in accordance with aspects of the present disclosure.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present subject matter, the articles "a,'' "an," "the," and "said" are intended to mean that there are one or more of the elements. The terms "comprising," "including," and "having" are intended to be inclusive and mean that there may be additional elements other than the listed elements. Furthermore, any numerical examples in the following discussion are intended to be nonlimiting, and thus additional numerical values, ranges, and percentages are within the scope of the disclosed embodiments.

Some generalized information is provided to provide both general context for aspects of the present disclosure and to facilitate understanding and explanation of certain of the technical concepts described herein.

The term processor, processing system, or processing unit, as used herein, refers to any type of processing unit that can carry out the required calculations needed for the various embodiments, such as single or multi-core: CPU, Accelerated Processing Unit (APU), Graphics Board, DSP, FPGA, ASIC or a combination thereof.

As used herein, the term "computing system" refers to an electronic computing device such as, but not limited to, a single computer, virtual machine, virtual container, host, server, laptop, and/or mobile device, or to a plurality of electronic computing devices working together to perform the function described as being performed on or by the computing system. As used herein, the terms "application", "application module" (or "module"), "engine", or "program", or "plugin" refers to one or more sets of computer software instructions (e.g., computer programs and/or scripts) executable by one or more processors of a computing system to provide particular functionality. Computer software instructions can be written in any suitable programming languages, such as C, C++, C#, Pascal, Fortran, Perl, MATLAB, SAS, SPSS, JavaScript, AJAX, and JAVA. Such computer software instructions can comprise an independent application with data input and data display aspects (e.g., modules). Alternatively, the disclosed computer software instructions can be classes that are instantiated as distributed objects. The disclosed computer software instructions can also be component software, for example JAVABEANS or ENTERPRISE JAVABEANS. Additionally, the disclosed applications or engines can be implemented in computer software, computer hardware, or a combination thereof.

As used herein, the terms "automatic" and "automatically" refer to actions that are performed by a computing device or computing system (e.g., of one or more computing devices) without human intervention. For example, automatically performed functions may be performed by computing devices or systems based solely on data stored on and/or received by the computing devices or systems despite the fact that no human users have prompted the computing devices or systems to perform such functions. As but one nonlimiting example, the computing devices or systems may make decisions and/or initiate other functions based solely on the decisions made by the computing devices or systems, regardless of any other inputs relating to the decisions.

Registration technologies are crucial for multi-phase, multi-modal, and follow-up analysis in medical imaging. Image registration allows for the establishment of spatial and temporal correspondence between images. In multi-phase analysis, alignment enables the accurate comparison of changes over time, facilitating the assessment of disease progression, treatment response, and the identification of potential biomarkers. In follow-up analysis, image registration enables the precise overlay of images acquired at different time points, such as pre- and post-treatment scans. This allows clinicians to accurately track changes in the patient's condition over time, assess the effectiveness of interventions, and make informed decisions regarding further treatment strategies. Multi-modal fusion involves integrating information from different imaging modalities such as magnetic resonance (MR), computed tomography (CT), and positron emission tomography (PET) scans. By aligning these modalities, clinicians can benefit from a more comprehensive and complementary view of the underlying anatomy and pathology, leading to improved diagnostic accuracy and treatment planning. Image registration plays a pivotal role in enabling accurate spatial and temporal alignment of medical images. This capability is essential for enhancing diagnostic accuracy, monitoring disease progression, and evaluating treatment response across various clinical applications.

Current strategies for comparing registration results may provide a static view that does not provide easy user interaction, red green blue fused views that transform real gray scale values which impair clinical interpretation, a chess board approach, or several viewports that demand high levels of concentration to focus on the same point. Integrated registration provides the capability to align and fuse two volumetric acquisitions from either the same or different modalities. This enables an easy comparison of three-dimensional (3D) anatomical images from CT, MR with PET, single-photon emission computed tomography (SPECT), and X-ray angiography for a comprehensive analysis. The view of the fused images is important to evaluate registration results in medical imaging since it allows for the visual assessment of the alignment and integration of information from different scanning modalities into a single comprehensive image.

The present disclosure provides for systems and methods for image fusion rendering for registered multi-volume analysis. In disclosed embodiments, systems and methods include obtaining a first three-dimensional (3D) medical image from a first medical imaging volume acquisition and a second 3D medical image from a second medical imaging volume acquisition, wherein the first medical imaging volume acquisition and the second medical imaging volume acquisition are integrally registered to each other. Systems and methods also include receiving a selection of a region of interest in the second 3D medical image. Systems and methods further include performing gradient domain fusion utilizing blending or integration of respective pixel intensities (e.g., signal intensities) between the region of interest selected in the second 3D medical image and a region in the first 3D medical image corresponding to the region of interest to generate a blended region of interest. The blending may occur utilizing Poisson blending, Laplacian pyramid blending, gradient domain fusion, or deep learning-based blending techniques. Systems and methods further include displaying, on a user interface, the first 3D medical image in a first viewport and the blended region of interest in a second viewport located at the region in the first 3D medical image corresponding to the region of interest. In certain embodiments, the first and second medical imaging volumes were acquired from the same imaging modality. In certain embodiments, the first and second medical imaging volumes were acquired from different imaging modalities.

The disclosed embodiments improve efficiency by providing a user interface that enables easy comparison of registered images. The disclosed embodiments also improve efficiency by providing a user interface that enables local analysis of two images sequences of different types. The disclosed embodiments enable comparison of registered images with fewer interactions by the user where the region of interest can be easily changed to compare to registered images. The disclosed embodiments provide an embedded viewport that can be navigated while inside another viewport. The disclosed embodiments improve the evaluation of registration results in medical imaging be enabling easy visual assessment of the alignment and integration of information. Thus, the disclosed embodiments improve diagnostic accuracy, monitoring of disease progression, and evaluation of treatment response across various clinical applications.

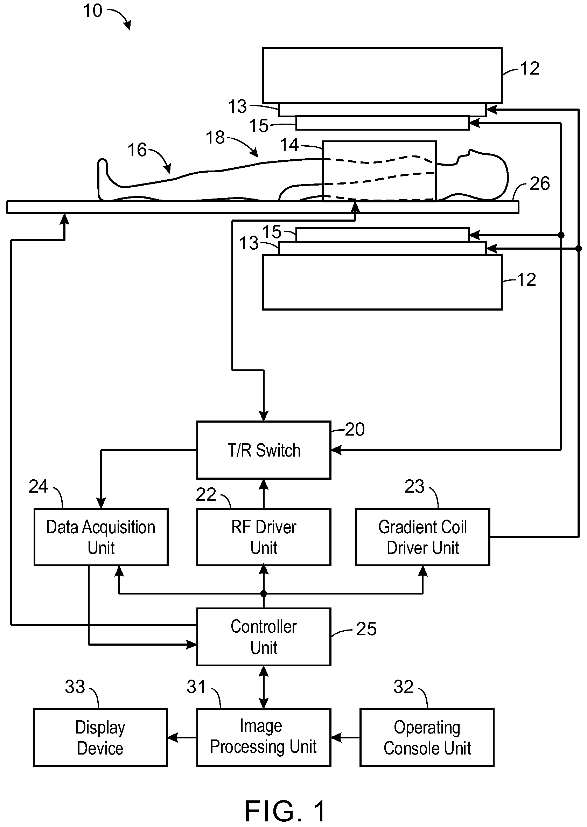

Turning now to FIG. 1, an illustration of an example imaging system as may be used to generate 3D multi-volume imaging data is shown. As an example, an MRI system 10 includes a magnetostatic field magnet unit 12, a gradient coil unit 13, an RF coil unit 14, an RF body or volume coil unit 15, a transmit/receive (T/R) switch 20, an RF driver unit 22, a gradient coil driver unit 23, a data acquisition unit 24, a controller unit 25, a patient bed or table 26, an image processing unit 31, an operating console unit 32, and a display device 33. In some examples, the RF coil unit 14 is a surface coil, which is a local coil typically placed proximate to the anatomy of interest of a subject 16. Herein, the RF body coil unit 15 is a transmit coil that transmits RF signals, and the local surface RF coil unit 14 receives the MR signals. As such, the transmit body coil (e.g., RF body coil unit 15) and the surface receive coil (e.g., RF coil unit 14) are separate but electromagnetically coupled components. The MRI system 10 transmits electromagnetic pulse signals to the subject 16 placed in an imaging space 18 with a static magnetic field formed to perform a scan for obtaining magnetic resonance signals from the subject 16. One or more images of the subject 16 can be reconstructed based on the magnetic resonance signals thus obtained by the scan.

The magnetostatic field magnet unit 12 includes, for example, an annular superconducting magnet, which is mounted within a toroidal vacuum vessel. The magnet defines a cylindrical space surrounding the subject 16 and generates a constant primary magnetostatic field *B₀.*

The MRI system 10 also includes a gradient coil unit 13 that forms a gradient magnetic field in the imaging space 18 so as to provide the magnetic resonance signals received by the RF coil arrays with three-dimensional positional information. The gradient coil unit 13 includes three gradient coil systems, each of which generates a gradient magnetic field along one of three spatial axes perpendicular to each other, and generates a gradient field in each of a frequency encoding direction, a phase encoding direction, and a slice selection direction in accordance with the imaging condition. More specifically, the gradient coil unit 13 applies a gradient field in the slice selection direction (or scan direction) of the subject 16, to select the slice; and the RF body coil unit 15 or the local RF coil arrays may transmit an RF pulse to a selected slice of the subject 16. The gradient coil unit 13 also applies a gradient field in the phase encoding direction of the subject 16 to phase encode the magnetic resonance signals from the slice excited by the RF pulse. The gradient coil unit 13 then applies a gradient field in the frequency encoding direction of the subject 16 to frequency encode the magnetic resonance signals from the slice excited by the RF pulse.

The RF coil unit 14 is disposed, for example, to enclose the region to be imaged of the subject 16. In some examples, the RF coil unit 14 may be referred to as the surface coil or the receive coil. In the static magnetic field space or imaging space 18 where a static magnetic field *B₀* is formed by the magnetostatic field magnet unit 12, the RF coil unit 15 transmits, based on a control signal from the controller unit 25, an RF pulse that is an electromagnet wave to the subject 16 and thereby generates a high-frequency magnetic field *B₁.* This excites a spin of protons in the slice to be imaged of the subject 16. The RF coil unit 14 receives, as a magnetic resonance signal, the electromagnetic wave generated when the proton spin thus excited in the slice to be imaged of the subject 16 returns into alignment with the initial magnetization vector. In some examples, the RF coil unit 14 may transmit the RF pulse and receive the MR signal. In other examples, the RF coil unit 14 may only be used for receiving the MR signals, but not transmitting the RF pulse.

The RF body coil unit 15 is disposed, for example, to enclose the imaging space 18, and produces RF magnetic field pulses orthogonal to the main magnetic field *B₀* produced by the magnetostatic field magnet unit 12 within the imaging space 18 to excite the nuclei. In contrast to the RF coil unit 14, which may be disconnected from the MRI system 10 and replaced with another RF coil unit, the RF body coil unit 15 is fixedly attached and connected to the MRI system 10. Furthermore, whereas local coils such as the RF coil unit 14 can transmit to or receive signals from only a localized region of the subject 16, the RF body coil unit 15 generally has a larger coverage area. The RF body coil unit 15 may be used to transmit or receive signals to the whole body of the subject 16, for example. Using receive-only local coils and transmit body coils provides a uniform RF excitation and good image uniformity at the expense of high RF power deposited in the subject. For a transmit-receive local coil, the local coil provides the RF excitation to the region of interest and receives the MR signal, thereby decreasing the RF power deposited in the subject. It should be appreciated that the particular use of the RF coil unit 14 and/or the RF body coil unit 15 depends on the imaging application.

The T/R switch 20 can selectively electrically connect the RF body coil unit 15 to the data acquisition unit 24 when operating in receive mode, and to the RF driver unit 22 when operating in transmit mode. Similarly, the T/R switch 20 can selectively electrically connect the RF coil unit 14 to the data acquisition unit 24 when the RF coil unit 14 operates in receive mode, and to the RF driver unit 22 when operating in transmit mode. When the RF coil unit 14 and the RF body coil unit 15 are both used in a single scan, for example if the RF coil unit 14 is configured to receive MR signals and the RF body coil unit 15 is configured to transmit RF signals, then the T/R switch 20 may direct control signals from the RF driver unit 22 to the RF body coil unit 15 while directing received MR signals from the RF coil unit 14 to the data acquisition unit 24. The coils of the RF body coil unit 15 may be configured to operate in a transmit-only mode or a transmit-receive mode. The coils of the local RF coil unit 14 may be configured to operate in a transmit-receive mode or a receive-only mode.

The RF driver unit 22 includes a gate modulator (not shown), an RF power amplifier (not shown), and an RF oscillator (not shown) that are used to drive the RF coils (e.g., RF coil unit 15) and form a high-frequency magnetic field in the imaging space 18. The RF driver unit 22 modulates, based on a control signal from the controller unit 25 and using the gate modulator, the RF signal received from the RF oscillator into a signal of predetermined timing having a predetermined envelope. The RF signal modulated by the gate modulator is amplified by the RF power amplifier and then output to the RF coil unit 15.

The gradient coil driver unit 23 drives the gradient coil unit 13 based on a control signal from the controller unit 25 and thereby generates a gradient magnetic field in the imaging space 18. The gradient coil driver unit 23 includes three systems of driver circuits (not shown) corresponding to the three gradient coil systems included in the gradient coil unit 13.

The data acquisition unit 24 includes a pre-amplifier (not shown), a phase detector (not shown), and an analog/digital converter (not shown) used to acquire the magnetic resonance signals received by the RF coil unit 14. In the data acquisition unit 24, the phase detector phase detects, using the output from the RF oscillator of the RF driver unit 22 as a reference signal, the magnetic resonance signals received from the RF coil unit 14 and amplified by the pre-amplifier, and outputs the phase-detected analog magnetic resonance signals to the analog/digital converter for conversion into digital signals. The digital signals thus obtained are output to the image processing unit 31.

The MRI apparatus 10 includes a table 26 for placing the subject 16 thereon. The subject 16 may be moved inside and outside the imaging space 18 by moving the table 26 based on control signals from the controller unit 25.

The controller unit 25 includes a computer and a recording medium on which a program to be executed by the computer is recorded. The program when executed by the computer causes various parts of the apparatus to carry out operations corresponding to pre-determined scanning. The recording medium may comprise, for example, a ROM, flexible disk, hard disk, optical disk, magneto-optical disk, CD-ROM, or non-volatile memory card. The controller unit 25 is connected to the operating console unit 32 and processes the operation signals input to the operating console unit 32 and furthermore controls the table 26, RF driver unit 22, gradient coil driver unit 23, and data acquisition unit 24 by outputting control signals to them. The controller unit 25 also controls, to obtain a desired image, the image processing unit 31 and the display device 33 based on operation signals received from the operating console unit 32.

The operating console unit 32 includes user input devices such as a touchscreen, keyboard and a mouse. The operating console unit 32 is used by an operator, for example, to input such data as an imaging protocol and to set a region where an imaging sequence is to be executed. The data about the imaging protocol and the imaging sequence execution region are output to the controller unit 25.

The image processing unit 31 includes a computing device and a recording medium on which a program to be executed by the computing device to perform predetermined data processing is recorded. The image processing unit 31 is connected to the controller unit 25 and performs data processing based on control signals received from the controller unit 25. The image processing unit 31 is also connected to the data acquisition unit 24 and generates spectrum data by applying various image processing operations to the magnetic resonance signals output from the data acquisition unit 24.

The display device 33 may display one or more images within a GUI on the display screen of the display device based on control signals received from the controller unit 25. The display device 33 displays, for example, an image regarding an input item about which the operator inputs operation data from the operating console unit 32. The display device 33 also displays a two-dimensional (2D) slice image or three-dimensional (3D) image of the subject 16 generated by the image processing unit 31.

The MRI system 10 may be configured for multi-volume imaging, e.g., multi-parametric and/or multi-phase imaging, wherein multiple imaging sequences and/or phases are imaged during a single imaging session. Resultant MRI imaging data may include images from each of the imaged sequences and/or phases, wherein the MRI imaging data is subdivided into specified sequences and/or phases. Each of the specified sequences and/or phases may define a plurality of 2D slices thereof, each of the 2D slices particular to a z-coordinate of the MRI imaging data. A z-coordinate may therefore define a plurality of 2D slices, one from each of the specified sequences and/or phases.

Though an MRI system is described by way of example, it should be understood that the present techniques may be applied to images acquired using other imaging systems capable of multi-parametric, multi-phase, or other type of multi-volume imaging, such as CT, tomosynthesis, PET, ultrasound, and so forth. The present discussion of an MRI imaging modality is provided merely as an example of one suitable imaging modality.

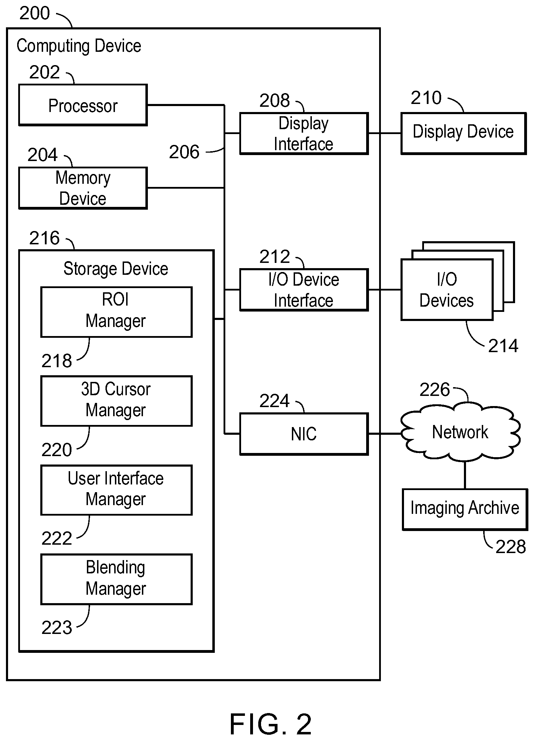

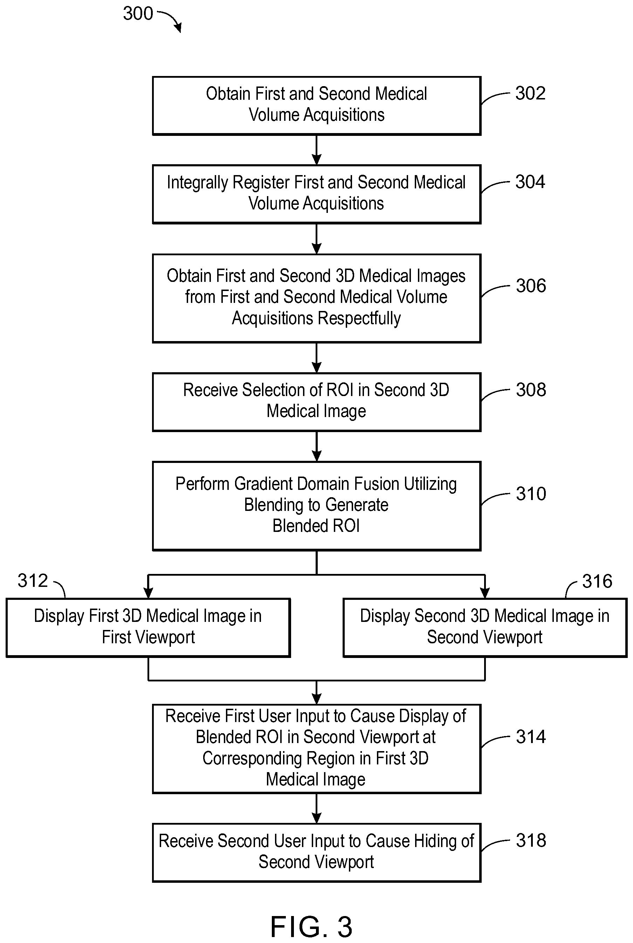

FIG. 2 is a block diagram of an example of a computing device 200 that can render medical imaging data. The computing device 200 may be, for example, a medical imaging system, such as the medical imaging system 10, a CT device, a PET device, an ultrasound device, a hospital monitor, a laptop computer, a desktop computer, a tablet computer, or a mobile phone, among others. The computing device 200 may include a processor 202 that is adapted to execute stored instructions, as well as a memory device 204 that stores instructions that are executable by the processor 202. The processor 202 can be a single core processor, a multi-core processor, a computing cluster, or any number of other configurations. The memory device 204 can include random access memory, read only memory, flash memory, or any other suitable memory systems. The instructions that are executed by the processor 202 may be used to implement a method that can render medical imaging data, as described in greater detail below in relation to FIGS. 3-4.

The processor 202 may also be linked through the system interconnect 206 (e.g., PCI, PCI-Express, NuBus, etc.) to a display interface 208 adapted to connect the computing device 200 to a display device 210. The display device 210 may include a display screen that is a built-in component of the computing device 200. The display device 210 may also include a computer monitor, television, or projector, among others, that is externally connected to the computing device 200. The display device 210 can include light emitting diodes (LEDs), and micro-LEDs, Organic light emitting diode OLED displays, among others.

The processor 202 may be connected through a system interconnect 206 to an input/output (I/O) device interface 212 adapted to connect the computing device 200 to one or more I/O devices 214. The I/O devices 214 may include, for example, a keyboard and a pointing device, wherein the pointing device may include a touchpad or a touchscreen, among others. The I/O devices 214 may be built-in components of the computing device 200, or may be devices that are externally connected to the computing device 200.

In some examples, the processor 202 may also be linked through the system interconnect 206 to a storage device 216 that can include a hard drive, an optical drive, a USB flash drive, an array of drives, or any combinations thereof. In some examples, the storage device 216 can include any suitable applications. In some examples, the storage device 216 can include a region of interest (ROI) manager 218. In some examples, the ROI manager 218 can obtain, using a three-dimensional cursor, a selection of a region of interest from a three-dimensional (3D) medical image. In some examples, the storage device 216 can also include a 3D cursor manager 220 that can detect a three-dimensional cursor setting for the region of interest. The three-dimensional cursor setting can indicate at least a rendering setting for the region of interest. The rendering setting, as referred to herein, can include a maximum intensity projection, a minimum intensity projection, or an average intensity projection, among others, of pixels or voxels within a region of medical imaging data. The storage device 216 can also include, in some examples, a user interface manager 222 that can modify a user interface that includes the 3D medical image with the three-dimensional cursor setting applied inside the region of interest. The user interface manager 222 can modify the user interface to display respective 3D medical images from respective medical imaging volume acquisitions. In addition, the user interface manager 222 can modify the user interface to show a selected region of interest within one 3D medical image on a viewport integrated on the other 3D medical image (in another viewport) in a region corresponding to the selected region of interest. In particular, the viewport integrated on the other 3D medical image shows a blended region of interest generated with gradient domain fusion utilizing blending on the selected region of interest and region of interest in the other 3D medical image that corresponds to the selected region of interest. The storage device 216 includes a blending manager 223 configured to perform gradient domain fusion utilizing blending to generate a blended region of interest between a region of interest selected in a source image and a corresponding region in a target image. The blending may occur utilizing Poisson blending, Laplacian pyramid blending, gradient domain fusion, or deep learning-based blending techniques.

In some examples, a network interface controller (also referred to herein as a NIC) 224 may be adapted to connect the computing device 200 through the system interconnect 206 to a network 226. The network 226 may be a cellular network, a radio network, a wide area network (WAN), a local area network (LAN), or the Internet, among others. The network 226 can enable data, such as alerts, among other data, to be transmitted from the computing device 200 to remote computing devices, remote display devices, and the like. For example, the network 226 may enable remote devices (e.g., imaging archive 228, among others) to generate or modify user interfaces by rendering any number of regions of interest in a medical imaging data set with a different rending setting, among other features.

It is to be understood that the block diagram of FIG. 2 is not intended to indicate that the computing device 200 is to include all of the components shown in FIG. 2. Rather, the computing device 200 can include fewer or additional components not illustrated in FIG. 2 (e.g., additional memory components, embedded controllers, additional modules, additional network interfaces, etc.). Furthermore, any of the functionalities of the ROI manager 218, 3D cursor manager 220, or user interface manager 222 may be partially, or entirely, implemented in hardware and/or in the processor 202. For example, the functionality may be implemented with an application specific integrated circuit, logic implemented in an embedded controller, or in logic implemented in the processor 202, among others. In some examples, the functionalities of the ROI manager 218, 3D cursor manager 220, or user interface manager 222 can be implemented with logic, wherein the logic, as referred to herein, can include any suitable hardware (e.g., a processor, among others), software (e.g., an application, among others), firmware, or any suitable combination of hardware, software, and firmware.

In some examples, the computing device 200 may be incorporated into an imaging system, such as the MRI system 10. For example, the computing device 200 may be the image processing unit 31 of the MRI system 10. However, in other examples, the computing device 200 may be disposed at a device (e.g., a server, edge device, etc.) communicably coupled to the imaging system via wired and/or wireless connections. In some examples, at least a portion of computing device 200 may be disposed at a separate device (e.g., a workstation) which can receive images from the imaging system or from a storage device which stores the images generated by the imaging system and/or other additional imaging systems.

In addition to the images directly provided by the computing device 200, images may be further sourced from an imaging archive 228 communicatively coupled to the computing device 200. The imaging archive 228 may comprise, for example, a picture archiving and communication system (PACS), a vendor neutral archive (VNA), or other suitable medical image database. The medical imaging archive may be hosted on a remote server configured to allow the computing device 200 to access the plurality of medical images and patient data hosted thereon. In some examples, the plurality of medical images stored in the imaging archive 228 may be of different types, for example MRI images, CT images, or ultrasound images, which can be stored in the imaging archive 228 for one or more patients.

FIG. 3 is a flow chart of a method 300 for image fusion rendering for registered multi-volume analysis. One or more steps of the method 300 may be performed by one or more components of the computing device 200 in FIG. 2.

The method 300 includes obtaining a first medical imaging volume acquisition and a second imaging volume acquisition (block 302). In certain embodiments, the first medical imaging volume acquisition and the second medical imaging volume acquisition were acquired with different medical imaging modalities. In certain embodiments, the first medical imaging volume acquisition and the second medical imaging volume acquisition were acquired with the same medical imaging modality. In certain embodiments, the first and second medical imaging volume acquisitions may have been acquired for a multi-phase analysis (e.g., an example using the same medical imaging modality). For example, the multi-phase analysis may be a CT study utilizing an injected contrast. Multi-phase imaging data includes multiple images taken of a target anatomy at various points in time, typically as intravenous contrast dye moves through the circulatory system. As an example, a multi-phase liver CT may include a non-contrasted phase image, an arterial phase image (e.g., late arterial phase), a portal venous phase image, and a delayed phase image, wherein each image is acquired at different times when the contrast dye is at a particular enhancement for a specified area. For example, for the arterial phase, peak aortic attenuation may be seen with minimal liver enhancement while, for the portal venous phase, peak liver parenchyma and portal and hepatic vein enhancement may be seen. In certain embodiments, the first and second medical imaging volume acquisitions may have been acquired for a multi-parametric analysis (e.g., an example using the same medical imaging modality). Multi-parametric imaging data may combine a plurality of imaging parameters (e.g., sequences) for a set of 3D medical imaging data. For example, a multi-parametric MRI may include data of multiple sequences, such as a T1-weighted sequence, a T2-weighted sequence, a T1 contrast enhanced (T1CE) sequence, a fluid attenuated inversion recovery (FLAIR) sequence, a diffusion weighted imaging (DWI) sequence, among many others.

The method 300 also includes integrally registering the first medical imaging volume acquisition to the second medical imaging volume acquisition (block 304). Integrated registration enables the alignment and fusion of two volumetric acquisitions from same or different medical imaging modalities. In certain embodiments, the registration may be rigid. In certain embodiments, the registration may be non-rigid (e.g., deformable).

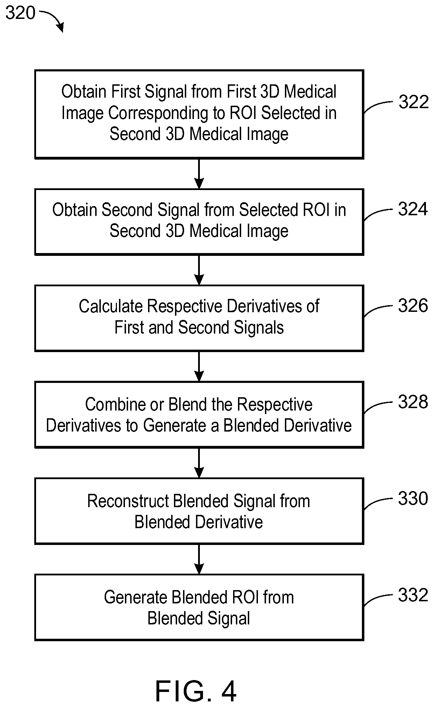

The method 300 further includes obtaining a first three-dimensional (3D) medical image (e.g., slice) from the first medical imaging volume acquisition and a second 3D medical image (e.g., slice) from the second medical imaging volume acquisition (block 306). The method 300 even further includes receiving a selection of a region of interest (ROI) in the second 3D medical image (e.g., via an I/O device 214 in FIG. 2) (block 308). The method 300 further includes performing gradient domain fusion utilizing blending of respective pixel intensities between the region of interest selected in the second 3D medical image and a region in the first 3D medical image corresponding to the region of interest to generate a blended region of interest. (block 310). Gradient domain fusion seamlessly blends an object or texture from a source image (e.g., second 3D medical imaging volume) into a target image (e.g., first medical imaging volume). In gradient domain fusion the source image is changed so that the gradient of source image is maximally preserved, while the overall intensity is matched to the target image. Gradient domain fusion is preferred over a naive solution (i.e., copy and pasting source image into the target image) since the naive solution results in an unnatural look. Thus, gradient domain fusion provides improved image quality. Gradient domain fusion using blending is described in greater detail in FIG. 4. The blending may occur utilizing Poisson blending, Laplacian pyramid blending, gradient domain fusion, or deep learning-based blending techniques.

The method 300 includes displaying, on a user interface (e.g., graphical user interface), the first 3D medical image in a first viewport (block 312). The method 300 also includes receiving a first user input (e.g., via an I/O device 214 in FIG. 2) to cause display of the blended region of interest in a second viewport located at the region (e.g., embedded) in the first 3D medical image corresponding to the region of interest (block 314). In certain embodiments, the method 300 also includes displaying the second 3D medical image in a third viewport adjacent to the first viewport (block 316). In certain embodiments, the second viewport is a dynamic cursor that may be utilized as described in U.S. Patent Application No. 18/496,782, entitled "METHODS AND SYSTEMS FOR MEDICAL IMAGE RENDERING", filed on October 27, 2023, which is herein incorporated by reference in its entirety. In particular, the second viewport may be a three-dimensional dynamic cursor having a three-dimensional cursor setting that can indicate at least a rendering setting for the region of interest shown in the second viewport. The rendering setting, as referred to herein, can include a maximum intensity projection, a minimum intensity projection, or an average intensity projection, among others, of pixels or voxels within a region of medical imaging data. In certain embodiments, the method 300 includes receiving a second user input (e.g., via an I/O device 214 in FIG. 2) to cause hiding of the second viewport and to instead cause display of the region in the first 3D medical image corresponding to the region of interest (block 318). Blocks 312 and 318 may occur at different points of the method 300 and as often as desired to turn on/off the display of the second viewport in the user interface.

FIG. 4 is a flow chart of a method 320 for performing gradient domain fusion using blending. One or more steps of the method 320 may be performed by one or more components of the computing device 200 in FIG. 2.

The method 320 includes obtaining a first signal (of pixel intensities or values) from the first 3D medical image corresponding to the region of interest selected in the second 3D medical image (block 322). The method 320 also includes obtaining a second signal (of pixel intensities or values) from the selected region of interest in the second 3D medial image (block 324). Blocks 322 and 324 may be performed simultaneously. The method 320 further includes calculating respective derivatives of the first and second signals (block 326). The average of the respective derivatives is centered around zero to provide a smoother blending in the derivative space. The method 320 even further includes combining or blending the respective derivatives to generate a blended derivative (block 328). The method 320 further includes reconstructing (via integration) a blended signal from the blended derivative (block 330). The method 320 even further includes generating the blended region of interest (i.e., blended region of interest image) from the blended signal (block 332).

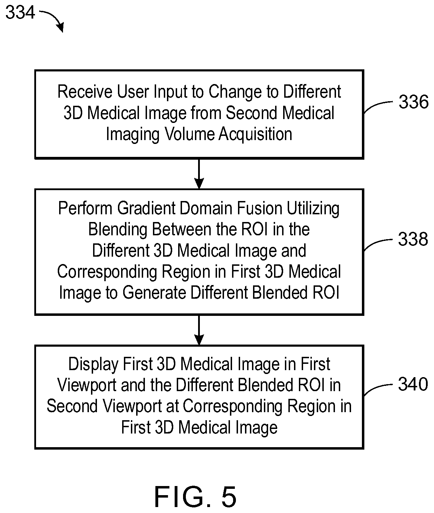

FIG. 5 is a flow chart of a method 334 for viewing different frames or slices of a region of interest. One or more steps of the method 334 may be performed by one or more components of the computing device 200 in FIG. 2. Method 334 may be performed in conjunction with or subsequent to the method 320 in FIG. 3.

The method 334 includes receiving a user input (e.g., via an I/O device 214 in FIG. 2) to change to a different 3D medical image from the second medical imaging volume acquisition, wherein the region of interest is the same in the different 3D medical image (block 336). In certain embodiments, the user input may be toggling on a mouse. This enables scrolling (within the second viewport) between different slices or frames for the region of interest in the second medical imaging volume acquisition independent of the first 3D medical image (and first medical imaging volume acquisition). This enables analysis of potential shifts in registration in a direction of a navigation axis. The method 334 also includes performing gradient domain fusion utilizing blending of the respective pixel intensities between the region of interest in the different 3D medical image and the region in the first 3D medical image corresponding to the region of interest to generate a different blended region of interest (block 338). The blending may occur utilizing Poisson blending, Laplacian pyramid blending, gradient domain fusion, or deep learning-based blending techniques. The method 334 even further includes displaying, on the user interface (e.g., graphical user interface), the first 3D medical image in the first viewport and the different blended region of interest in the second viewport located at the region in the first 3D medical image corresponding to the region of interest (block 340).

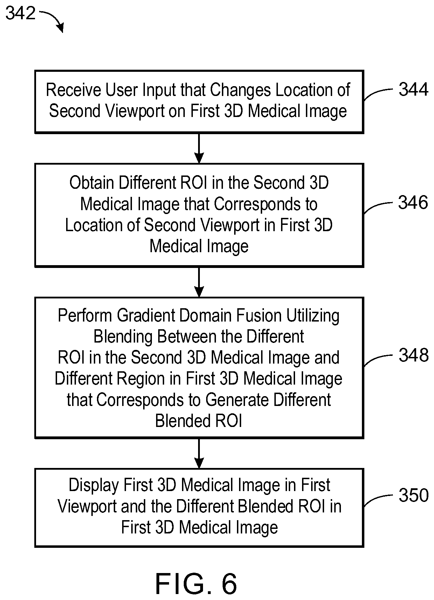

FIG. 6 is a flow chart of a method 342 for changing location of a second viewport. One or more steps of the method 342 may be performed by one or more components of the computing device 200 in FIG. 2. Method 342 may be performed in conjunction with or subsequent to the method 320 in FIG. 3.

The method 342 includes receiving a user input (e.g., via an I/O device 214 in FIG. 2) that changes a location of the second viewport on the first 3D medical image (block 344). The method 342 also includes obtaining a different region of interest in the second 3D medical image that corresponds to the location of the second viewport on the first 3D medical image (block 346). The method 342 further includes performing gradient domain fusion utilizing blending of the respective pixel intensities between the different region of interest in the second 3D medical image and a different region in the first 3D medical image corresponding to the different region of interest to generate a different blended region of interest (block 348). The blending may occur utilizing Poisson blending, Laplacian pyramid blending, gradient domain fusion, or deep learning-based blending techniques. The method 342 even further includes displaying, on the user interface (e.g., graphical user interface), the first 3D medical image in the first viewport and the different blended region of interest in the second viewport located at the different region in the first 3D medical image corresponding to the different region of interest (block 350).

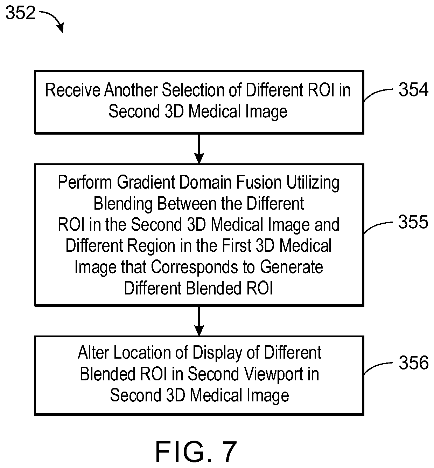

FIG. 7 is a flow chart of a method 352 for changing a region of interest. One or more steps of the method 352 may be performed by one or more components of the computing device 200 in FIG. 2. Method 352 may be performed in conjunction with or subsequent to the method 320 in FIG. 3.

The method 352 includes receiving another selection of a different region of interest in the second 3D medical image (block 354). The method 352 also includes performing gradient domain fusion utilizing blending of respective pixel intensities between the different region of interest selected in the second 3D medical image and a different region in the first 3D medical image corresponding to the different region of interest to generate a different blended region of interest (block 355). The blending may occur utilizing Poisson blending, Laplacian pyramid blending, gradient domain fusion, or deep learning-based blending techniques. The method 352 also includes altering, on the user interface (e.g., graphical user interface), a location of display of the different blended region in the second viewport in the first 3D medical image to correspond with the different region of interest (block 356).

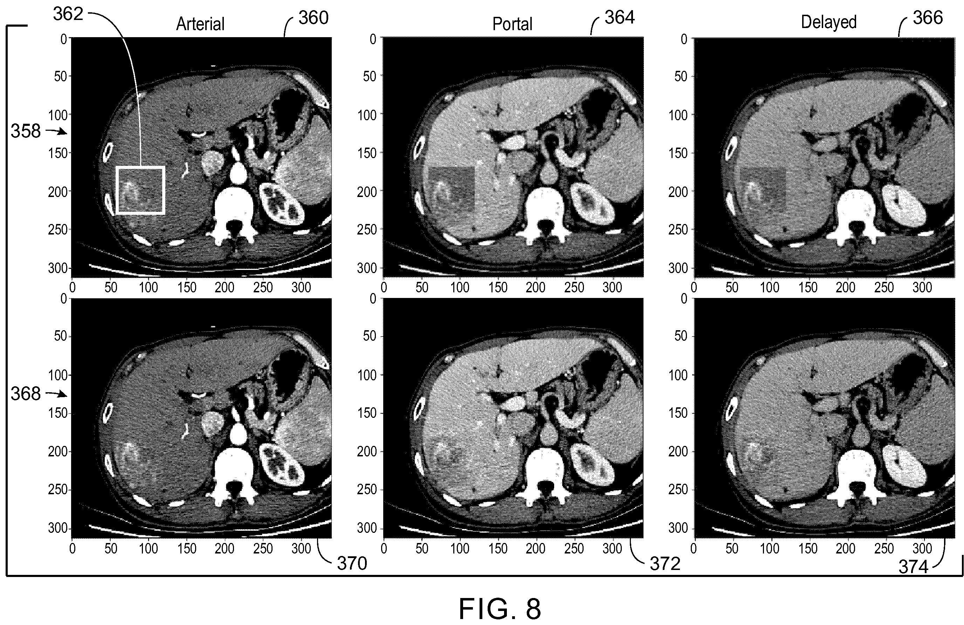

FIG. 8 depicts images illustrating the comparison of arterial lesion in portal and delayed phases utilizing a naive solution and gradient domain fusion using blending (e.g., Poisson blending). The images are derived from a multi-phase liver CT on a subject where each image is acquired at different times when the contrast dye is at a particular enhancement for a specified area. A top row 358 includes an arterial phase image 360 (e.g., lateral arterial phase). Box 362 on image 360 marks a region of interest including a lesion with arterial hyperenhancement that is to be copy and pasted in the corresponding regions on a portal venous phase image and a delayed phase image via naive fusion (e.g., regular blending). The top row 358 also includes a portal venous phase image 364 having the region of interest in image 360 fused (via naive fusion) in the corresponding region of interest. The corresponding region of interest in image 364 without the region of interest fused on is subject to washout. The top row 358 further includes a delayed phase image 366 having the region of interest in image 360 fused (via naive fusion) in the corresponding region of interest. In both images 364 and 366, the fused region of interest from image 360 looks unnatural on images 364 and 366.

A bottom row 368 includes an arterial phase image 370 (which is the same as the image 360) without the region of interest marked. The region of interest in box 362 on image 360 is also fused in the corresponding regions on a portal venous phase image and a delayed phase image via gradient domain fusion using Poisson blending (i.e., advanced fusion). The bottom row 368 also includes a portal venous phase image 372 having the region of interest in image 360 fused (via gradient domain fusion using Poisson blending) in the corresponding region of interest. The corresponding region of interest in image 372 without the region of interest fused on is subject to washout. The bottom row 368 further includes a delayed phase image 374 having the region of interest in image 360 fused (via gradient domain fusion using Poisson blending) in the corresponding region of interest. In both images 372 and 374, the fused region of interest from image 360 looks more natural on images 372 and 374.

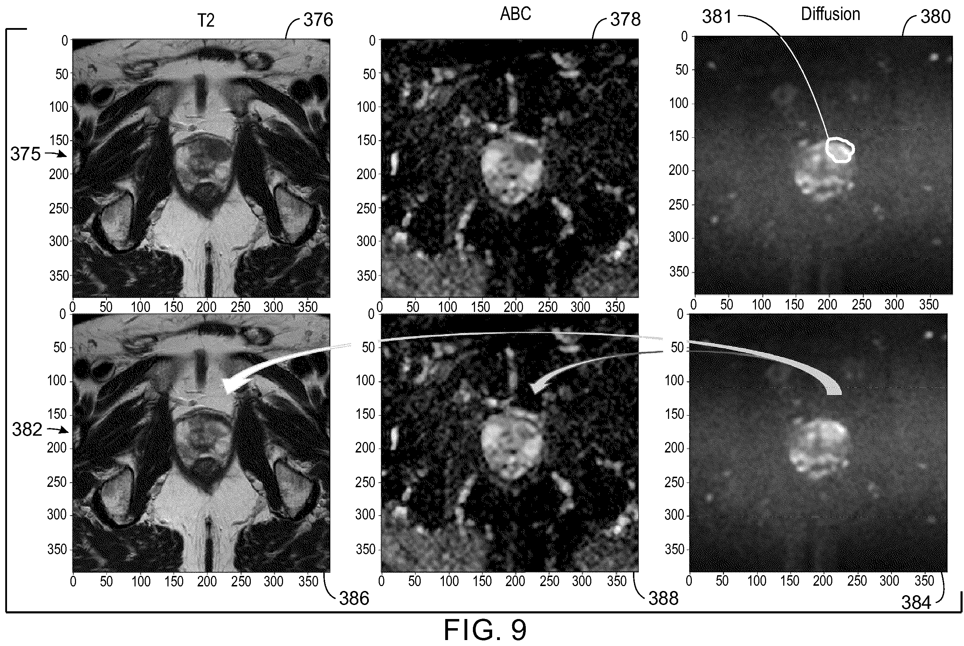

FIG. 9 depicts images illustrating the comparison of a diffusion lesion in images acquired with different sequences utilizing a naive solution and gradient domain fusion using blending (e.g., Poisson blending). The images are from an MR multi-parametric acquisition (e.g. using different sequences) of a prostate of a subject. A top row 375 includes a T2-weighted image 376 (e.g., acquired with a T2-weighted sequence), an arterial blood contrast (ABC) image 378 (e.g., acquired with an ABC sequence), and a diffusion-weighted image 380 (e.g., acquired with a diffusion-weighted sequence). Boundary 381 in image 380 includes a region of interest of a diffusion lesion. A bottom row 382 includes a diffusion-weighted image 384 (same as image 378) without the region of interest marked. The region of interest (diffusion lesion) in image 380 is fused in the corresponding regions on a T2-weighted image (e.g., image 376) and an ABC image (e.g. image 378) via gradient domain fusion using Poisson blending (i.e., advanced fusion). The bottom row 382 includes a T2-weighted image 386 having the region of interest in image 380 fused (via gradient domain fusion using Poisson blending) in the corresponding region of interest. The bottom row 382 also includes an ABC image 388 having the region of interest in in image 380 fused (via gradient domain fusion using Poisson blending) in the corresponding region of interest.

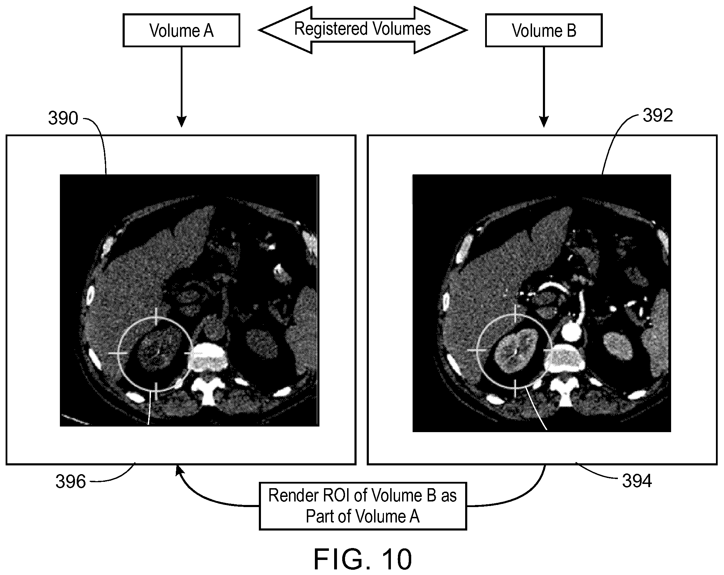

FIG. 10 is a schematic diagram illustrating image fusion rendering for registered multi-volume analysis. Two medical imaging volume acquisitions of a subject were acquired, volumes A and B, that are integrally registered to each other. Images 390 and 392 are respectively displayed (e.g., on a user interface) for volumes A and B. Cursor 394 marks a region of interest selected in image 392. The region of interest select in image 392 is subjected to gradient domain fusion using blending and fused into the corresponding region in image 392 indicated by another cursor 396. The blending may occur utilizing Poisson blending, Laplacian pyramid blending, gradient domain fusion, or deep learning-based blending techniques. Cursors 394 and 396 may be dynamic 3D cursors as described above.

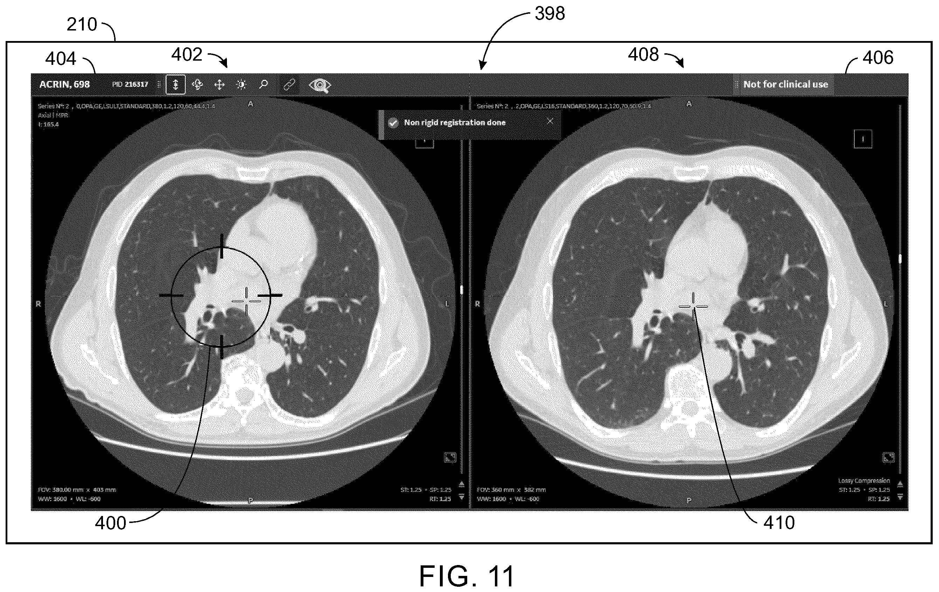

FIG. 11 is an example of a graphical user interface 398 on the display 210 having an integrated viewport 400 on another viewport 402. Two medical imaging volume acquisitions of a subject were acquired and integrally registered to each other (e.g., via non-rigid registration). Images 404 and 406 are respectively displayed adjacent each other on the graphical user interface 398 for the two medical imaging volume acquisitions in viewports 402 and 408. Cursor marks a region of interest selected in image 406. The region of interest in image 406 is subjected to gradient domain fusion using blending and fused into the corresponding region in image 404 shown within viewport 400. The blending may occur utilizing Poisson blending, Laplacian pyramid blending, gradient domain fusion, or deep learning-based blending techniques. Viewport 400 is a dynamic 3D cursor as described above. In certain embodiments, via user input (e.g., via I/O device 214 in FIG. 2) the viewport 400 (and the blended region of interest within) may be hidden (i.e., rendering feature turned off) and the corresponding region in image 404 shown instead. In certain embodiments, via user input (e.g., via I/O device 214 in FIG. 2) the viewport 400 may be shown again (i.e., rendering feature on) on the viewport 402 (i.e., on the image 404). In certain embodiments, selecting the region of interest within the viewport 400 or the viewport 400 and scrolling (e.g., via I/O device 214 in FIG. 2) enables the region of interest to show another slice from the medical imaging volume acquisition (from which the region of interest is derived) to be shown in viewport 400 and the slice (i.e., image) for the region of interest shown in viewport 400 to be shown in viewport 408. In certain embodiments, the location of the 402 viewport may be changed (e.g., via I/O device 214 in FIG. 2) on the viewport 400 (i.e., on image 404) and the region of interest in image 406 that corresponds to the new location of the viewport 400 will be shown within the viewport 400 (while the cursor 410 will also change location to where the corresponding region of interest is located in image 406). In certain embodiments, the location of the cursor 410 on image 406 may be changed (e.g., via I/O device 214 in FIG. 2) and the region of interest shown in viewport 400 (and the location of the viewport 400 on image 404) will change to correspond to the new location of the cursor 410 in image 406.

Technical effects of the disclosed embodiments include improving efficiency by providing a user interface that enables easy comparison of registered images. Technical effects of the disclosed embodiments include improving efficiency by providing a user interface that enables local analysis of two images sequences of different types. Technical effects of the disclosed embodiments include enabling comparison of registered images with fewer interactions by the user where the region of interest can be easily changed to compare to registered images. Technical effects of the disclosed embodiments include providing an embedded viewport that can be navigated while inside another viewport. Technical effects of the disclosed embodiments include improving the evaluation of registration results in medical imaging be enabling easy visual assessment of the alignment and integration of information. Technical effects of the disclosed embodiments include enabling an easier assessment of a structure of interest. Technical effects of the disclosed embodiments include improving diagnostic accuracy, monitoring of disease progression, and evaluation of treatment response across various clinical applications.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

The disclosure also provides support for a system, comprising: a memory encoding processor-executable routines; and a processing system comprising one or more processors and configured to access the memory and to execute the processor-executable routines, wherein the processor-executable routines, when executed by the processing system, cause the processing system to: obtain a first three-dimensional (3D) medical image from a first medical imaging volume acquisition and a second 3D medical image from a second medical imaging volume acquisition, wherein the first medical imaging volume acquisition and the second medical imaging volume acquisition are integrally registered to each other; receive a selection of a region of interest in the second 3D medical image; perform gradient domain fusion utilizing blending of respective pixel intensities between the region of interest selected in the second 3D medical image and a region in the first 3D medical image corresponding to the region of interest to generate a blended region of interest; and display, on a user interface, the first 3D medical image in a first viewport and the blended region of interest in a second viewport located at the region in the first 3D medical image corresponding to the region of interest. In a first example of the system, the processor-executable routines, when executed by the processing system, cause the processing system to integrally register the first medical imaging volume acquisition to the second medical imaging volume acquisition. In a second example of the system, optionally including the first example, the first medical imaging volume acquisition and the second medical imaging volume acquisition were acquired with different medical imaging modalities. **In** a third example of the system, optionally including one or both of the first and second examples, the first medical imaging volume acquisition and the second medical imaging volume acquisition were acquired with the same medical imaging modality. **In a** fourth example of the system, optionally including one or more or each of the first through third examples, the processor-executable routines, when executed by the processing system, cause the processing system to display the second 3D medical image in a third viewport adjacent to the first viewport. **In** a fifth example of the system, optionally including one or more or each of the first through fourth examples, the processor-executable routines, when executed by the processing system, cause the processing system to receive a first user input to cause display of the blended region of interest in the second viewport located at the region in the first 3D medical image corresponding to the region of interest. **In** a sixth example of the system, optionally including one or more or each of the first through fifth examples, the processor-executable routines, when executed by the processing system, cause the processing system to receive a second user input to cause hiding of the second viewport and to instead cause display of the region in the first 3D medical image corresponding to the region of interest. **In** a seventh example of the system, optionally including one or more or each of the first through sixth examples, the processor-executable routines, when executed by the processing system, cause the processing system to: receive a user input to change to a different 3D medical image from the second medical imaging volume acquisition, wherein the region of interest is the same in the different 3D medical image; perform gradient domain fusion utilizing blending of the respective pixel intensities between the region of interest in the different 3D medical image and the region in the first 3D medical image corresponding to the region of interest to generate a different blended region of interest; and display, on the user interface, the first 3D medical image in the first viewport and the different blended region of interest in the second viewport located at the region in the first 3D medical image corresponding to the region of interest. **In an** eighth example of the system, optionally including one or more or each of the first through seventh examples, the processor-executable routines, when executed by the processing system, cause the processing system to: receive a user input that changes a location of the second viewport on the first 3D medical image; obtain a different region of interest in the second 3D medical image that corresponds to the location of the second viewport on the first 3D medical image; perform gradient domain fusion utilizing blending of the respective pixel intensities between the different region of interest in the second 3D medical image and a different region in the first 3D medical image corresponding to the different region of interest to generate a different blended region of interest; and display, on the user interface, the first 3D medical image in the first viewport and the different blended region of interest in the second viewport located at the different region in the first 3D medical image corresponding to the different region of interest. In a ninth example of the system, optionally including one or more or each of the first through eighth examples, the processor-executable routines, when executed by the processing system, cause the processing system to: receive another selection of a different region of interest in the second 3D medical image; perform gradient domain fusion utilizing blending of respective pixel intensities between the different region of interest selected in the second 3D medical image and a different region in the first 3D medical image corresponding to the different region of interest to generate a different blended region of interest; and alter, on the user interface, a location of display of the different blended region in the second viewport in the first 3D medical image to correspond with the different region of interest. In a tenth example of the system, optionally including one or more or each of the first through ninth examples, the second viewport comprises a three-dimensional cursor having a three-dimensional cursor setting for rendering the region of interest.

The disclosure also provides support for a computer-implemented method, comprising: obtaining, via a processing system comprising one or more processors, a first three-dimensional (3D) medical image from a first medical imaging volume acquisition and a second 3D medical image from a second medical imaging volume acquisition, wherein the first medical imaging volume acquisition and the second medical imaging volume acquisition are integrally registered to each other; receiving, at the processing system, a selection of a region of interest in the second 3D medical image; performing, via the processing system, gradient domain fusion utilizing blending of respective pixel intensities between the region of interest selected in the second 3D medical image and a region in the first 3D medical image corresponding to the region of interest to generate a blended region of interest; and displaying, via the processing system on a user interface, the first 3D medical image in a first viewport and the blended region of interest in a second viewport located at the region in the first 3D medical image corresponding to the region of interest. In a first example of the computer-implemented method, the first medical imaging volume acquisition and the second medical imaging volume acquisition were acquired with different medical imaging modalities. In a second example of the computer-implemented method, optionally including the first example, the first medical imaging volume acquisition and the second medical imaging volume acquisition were acquired with different medical imaging modalities. In a third example of the computer-implemented method, optionally including one or both of the first and second examples, the computer-implemented method further comprises receiving, at the processing system, a first user input causing display of the blended region of interest in the second viewport located at the region in the first 3D medical image corresponding to the region of interest. In a fourth example of the computer-implemented method, optionally including one or more or each of the first through third examples, the computer-implemented method further comprises receiving, at the processing system, a second user input causing hiding of the second viewport and instead causing display of the region in the first 3D medical image corresponding to the region of interest. In a fifth example of the computer-implemented method, optionally including one or more or each of the first through fourth examples, the computer-implemented method further comprises: receiving, at the processing system, a user input to change to a different 3D medical image from the second medical imaging volume acquisition, wherein the region of interest is the same in the different 3D medical image; performing, via the processing system, gradient domain fusion utilizing blending of the respective pixel intensities between the region of interest in the different 3D medical image and the region in the first 3D medical image corresponding to the region of interest to generate a different blended region of interest; and displaying, via the processing system on the user interface, the first 3D medical image in the first viewport and the different blended region of interest in the second viewport located at the region in the first 3D medical image corresponding to the region of interest. In a sixth example of the computer-implemented method, optionally including one or more or each of the first through fifth examples, the computer-implemented method further comprises: receiving, at the processing system, a user input that changes a location of the second viewport on the first 3D medical image; obtaining, via the processing system, a different region of interest in the second 3D medical image that corresponds to the location of the second viewport on the first 3D medical image; performing, via the processing system, gradient domain fusion utilizing blending of the respective pixel intensities between the different region of interest in the second 3D medical image and a different region in the first 3D medical image corresponding to the different region of interest to generate a different blended region of interest; and displaying, via the processing system on the user interface, the first 3D medical image in the first viewport and the different blended region of interest in the second viewport located at the different region in the first 3D medical image corresponding to the different region of interest. In a seventh example of the computer-implemented method, optionally including one or more or each of the first through sixth examples, the computer-implemented method further comprises: receiving, at the processing system, another selection of a different region of interest in the second 3D medical image; performing, via the processing system, gradient domain fusion utilizing blending of respective pixel intensities between the different region of interest selected in the second 3D medical image and a different region in the first 3D medical image corresponding to the different region of interest to generate a different blended region of interest; and altering, via the processing system on the user interface, a location of display of the different blended region in the second viewport in the first 3D medical image to correspond with the different region of interest.

The disclosure also provides support for a non-transitory computer-readable medium, the non-transitory computer-readable medium comprising processor-executable code that when executed by a processing system comprising one or more processors, causes the processing system to: obtain a first three-dimensional (3D) medical image from a first medical imaging volume acquisition and a second 3D medical image from a second medical imaging volume acquisition, wherein the first medical imaging volume acquisition and the second medical imaging volume acquisition are integrally registered to each other; receive a selection of a region of interest in the second 3D medical image; perform gradient domain fusion utilizing blending of respective pixel intensities between the region of interest selected in the second 3D medical image and a region in the first 3D medical image corresponding to the region of interest to generate a blended region of interest; and display, on a user interface, the first 3D medical image in a first viewport and the blended region of interest in a second viewport located at the region in the first 3D medical image corresponding to the region of interest.

This written description uses examples to disclose the present subject matter, including the best mode, and also to enable any person skilled in the art to practice the subject matter, including making and using any devices or systems and performing any incorporated methods. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system, comprising:
a memory encoding processor-executable routines; and
a processing system comprising one or more processors and configured to access the memory and to execute the processor-executable routines, wherein the processor-executable routines, when executed by the processing system, cause the processing system to:
obtain a first three-dimensional (3D) medical image from a first medical imaging volume acquisition and a second 3D medical image from a second medical imaging volume acquisition, wherein the first medical imaging volume acquisition and the second medical imaging volume acquisition are integrally registered to each other;
receive a selection of a region of interest in the second 3D medical image;
perform gradient domain fusion utilizing blending of respective pixel intensities between the region of interest selected in the second 3D medical image and a region in the first 3D medical image corresponding to the region of interest to generate a blended region of interest; and
display, on a user interface, the first 3D medical image in a first viewport and the blended region of interest in a second viewport located at the region in the first 3D medical image corresponding to the region of interest.

2. The system of claim 1, wherein the processor-executable routines, when executed by the processing system, cause the processing system to integrally register the first medical imaging volume acquisition to the second medical imaging volume acquisition.

3. The system of claim **1,** wherein the first medical imaging volume acquisition and the second medical imaging volume acquisition were acquired with different medical imaging modalities.

4. The system of claim 1, wherein the first medical imaging volume acquisition and the second medical imaging volume acquisition were acquired with the same medical imaging modality.

5. The system of claim 1, wherein the processor-executable routines, when executed by the processing system, cause the processing system to display the second 3D medical image in a third viewport adjacent to the first viewport.

6. The system of claim 1, wherein the processor-executable routines, when executed by the processing system, cause the processing system to receive a first user input to cause display of the blended region of interest in the second viewport located at the region in the first 3D medical image corresponding to the region of interest.

7. The system of claim 6, wherein the processor-executable routines, when executed by the processing system, cause the processing system to receive a second user input to cause hiding of the second viewport and to instead cause display of the region in the first 3D medical image corresponding to the region of interest.

8. The system of claim 1, wherein the processor-executable routines, when executed by the processing system, cause the processing system to:
receive a user input to change to a different 3D medical image from the second medical imaging volume acquisition, wherein the region of interest is the same in the different 3D medical image;
perform gradient domain fusion utilizing blending of the respective pixel intensities between the region of interest in the different 3D medical image and the region in the first 3D medical image corresponding to the region of interest to generate a different blended region of interest; and
display, on the user interface, the first 3D medical image in the first viewport and the different blended region of interest in the second viewport located at the region in the first 3D medical image corresponding to the region of interest.

9. The system of claim 1, wherein the processor-executable routines, when executed by the processing system, cause the processing system to:
receive a user input that changes a location of the second viewport on the first 3D medical image;
obtain a different region of interest in the second 3D medical image that corresponds to the location of the second viewport on the first 3D medical image;
perform gradient domain fusion utilizing blending of the respective pixel intensities between the different region of interest in the second 3D medical image and a different region in the first 3D medical image corresponding to the different region of interest to generate a different blended region of interest; and
display, on the user interface, the first 3D medical image in the first viewport and the different blended region of interest in the second viewport located at the different region in the first 3D medical image corresponding to the different region of interest.

10. The system of claim 1, wherein the processor-executable routines, when executed by the processing system, cause the processing system to:
receive another selection of a different region of interest in the second 3D medical image;
perform gradient domain fusion utilizing blending of respective pixel intensities between the different region of interest selected in the second 3D medical image and a different region in the first 3D medical image corresponding to the different region of interest to generate a different blended region of interest; and
alter, on the user interface, a location of display of the different blended region in the second viewport in the first 3D medical image to correspond with the different region of interest.

11. The system of claim 1, wherein the second viewport comprises a three-dimensional cursor having a three-dimensional cursor setting for rendering the region of interest.

12. A computer-implemented method, comprising:
obtaining, via a processing system comprising one or more processors, a first three-dimensional (3D) medical image from a first medical imaging volume acquisition and a second 3D medical image from a second medical imaging volume acquisition, wherein the first medical imaging volume acquisition and the second medical imaging volume acquisition are integrally registered to each other;
receiving, at the processing system, a selection of a region of interest in the second 3D medical image;
performing, via the processing system, gradient domain fusion utilizing blending of respective pixel intensities between the region of interest selected in the second 3D medical image and a region in the first 3D medical image corresponding to the region of interest to generate a blended region of interest; and
displaying, via the processing system on a user interface, the first 3D medical image in a first viewport and the blended region of interest in a second viewport located at the region in the first 3D medical image corresponding to the region of interest.

13. The computer-implemented method of claim 12, wherein the first medical imaging volume acquisition and the second medical imaging volume acquisition were acquired with different medical imaging modalities.

14. The computer-implemented method of claim 12, wherein the first medical imaging volume acquisition and the second medical imaging volume acquisition were acquired with the same medical imaging modality.

15. A non-transitory computer-readable medium, the non-transitory computer-readable medium comprising processor-executable code that when executed by a processing system comprising one or more processors, causes the processing system to:
obtain a first three-dimensional (3D) medical image from a first medical imaging volume acquisition and a second 3D medical image from a second medical imaging volume acquisition, wherein the first medical imaging volume acquisition and the second medical imaging volume acquisition are integrally registered to each other;
receive a selection of a region of interest in the second 3D medical image;
perform gradient domain fusion utilizing blending of respective pixel intensities between the region of interest selected in the second 3D medical image and a region in the first 3D medical image corresponding to the region of interest to generate a blended region of interest; and
display, on a user interface, the first 3D medical image in a first viewport and the blended region of interest in a second viewport located at the region in the first 3D medical image corresponding to the region of interest.
